# EUROPEAN PATENT APPLICATION

(11) **EP 1 967 414 A1**
(43) Date of publication of application: **10.09.2008**
(21) Application number: 07103796.4
(22) Date of filing: 08.03.2007
(51) Int. Cl.: B60N 2/48

(54) **Headrest unit for a motor-vehicle seat, provided with an anti-whiplash device, with fluid actuating means**

(71) Applicant: Martur Sunger ve Koltuk Tesisleri Ticaret Sanayi A.S., 80670 Maslak Istanbul (TR)
(72) Inventor: Turletti, Massimo, 10149 Torino (IT)
(74) Representative: Notaro, Giancarlo

(57) **Abstract**

A headrest unit for a motor vehicle seat comprising a headrest supporting structure (2) which can be fixed to the structure of the seat backrest, and a headrest frame (6), provided with a headrest padding (9) and pivotally mounted on the supporting structure (2) around a horizontal axis (7). The frame (6) is movable between a position of normal use and a forwardly rotated position. First spring means (8) tend to bias the frame (6) towards the forwardly rotated position. The frame is held in its position of normal use by a primary lock bolt (13). The primary lock bolt (13) is subjected to the action of second spring means (16) which tend to bias it towards a position disengaged from a cooperating seat (15) of the headrest supporting structure (2). The primary lock bolt (13) is held in its engaged condition by a secondary lock bolt (18). In case of a rear collision of the motor vehicle, an inertial mass (27) causes disengagement of the secondary lock bolt (18) through the interposition of fluid actuating means (21, 24) with resulting disengagement of the primary lock bolt (13) and forward rotation of the headrest due to the action of the first spring means.

## Description

The present invention relates to headrest units for motor-vehicle seats, of the type comprising:
- a headrest supporting structure which can be fixed to the backrest structure of the seat,
- a headrest padding, pivotally mounted on said supporting structure around a horizontal transverse axis and movable between a position of normal use and a forwardly rotated position, and
- an inertial mass carried by the headrest frame, for causing a movement of the headrest frame from the position of normal use to the forwardly rotated position, following a rear collision of the motor-vehicle.

A headrest unit having the above indicated features is disclosed for instance in US-A-5 934 750.

The object of the present invention is that of providing a headrest unit of the above indicated type which has a relatively simple and reliable structure.

In view of achieving this object, the invention provides a headrest unit having the above described features, and further characterized in that:
between the headrest frame and the headrest supporting structure there are interposed first spring means for biasing the headrest towards the forwardly rotated position,
on the headrest frame there is mounted a primary locking member, which engages the supporting structure so as to keep the headrest frame in his normal position of use, against the action of said first spring means,
between the primary locking member and the headrest frame there are interposed second spring means which tend to bias the primary locking member towards a position disengaged from the headrest supporting structure,

- the headrest frame carries a secondary locking member which is elastically pushed towards a position in which it locks the primary locking member in its engaged position, against the action of said second spring means, and
- said inertial mass is arranged to force the secondary locking member, with the aid of fluid actuating means, towards a position disengaged from the primary locking member following a rear collision of the motor-vehicle.

In the preferred embodiment, these fluid actuating means comprise a deformable bag filled with a liquid, which transfers a force exerted thereagainst by the inertial mass following a rear collision of the motor vehicle to a piston member which is operatively connected to the secondary locking member.

Further features and advantages of the invention will become apparent from the following description with reference to the annexed drawings, given purely by way of non limiting example, in which:
- figure 1 is a diagrammatic cross-sectional view of a preferred embodiment of the headrest unit according to the present invention, and
- figure 2 is a diagrammatic perspective view, partially in cross-section of the headrest unit of figure 1.

With reference to the drawings, numeral 1 generally designates a headrest comprising a supporting structure 2 of metal material which, in a way known per se, includes two vertical rods 3. The lower ends of the vertical rods 3 are to be received and locked within cooperating receiving bushes (not shown) provided on the structure of the seat backrest, in a way known per se. The details relating to this coupling are not described nor shown herein, since they do not fall within the scope of the present invention and also because their deletion from the drawings renders the latter simpler and easier to understand.

The two vertical rods 3 constituting the supporting structure 2 are connected at their upper ends by a cross-member 4. Furthermore, on one of these rods 3 there is fixed (for instance welded) an element 5 having a receiving seat 15, whose function will become apparent in the following.

Reference numeral 6 generally designates the frame of the headrest, which in the illustrated example is constituted by a hollow structure, of metal or plastic material, and open at the bottom so as to provide easy access to the inner parts of the headrest through its lower mouth 6a. The frame 6 is pivotally mounted on the upper cross-member 4 of the supporting structure 2 around a horizontal transverse axis 7.

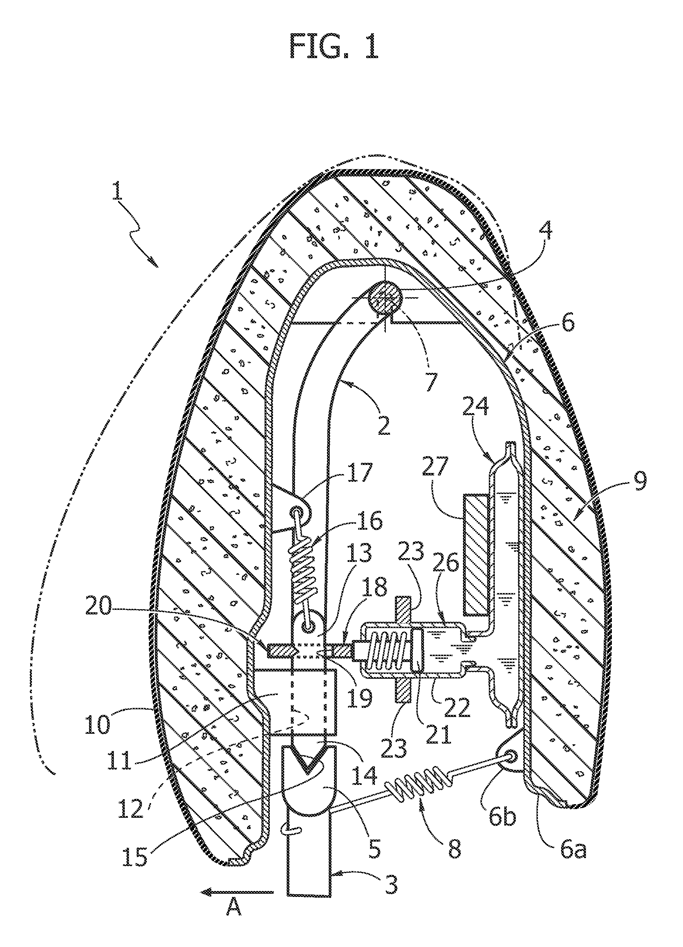

In the present description, and in the followings claims, by the expression "longitudinal direction" of the headrest a direction is meant which is parallel to the longitudinal direction of the motor vehicle in the mounted condition of the headrest on the motor vehicle seat. By the expression "horizontal transverse direction" reference is made to a horizontal direction orthogonal with respect to the above mentioned longitudinal direction. Furthermore, wherever in the present description reference is made to the "front" side or the "rear" side of the headrest, reference is made to the sides facing the front part and the rear part of the motor vehicle, respectively, in the mounted condition of the headrest on the motor vehicle seat. Figure 1 shows the headrest according to the invention in its position of normal use. Starting from this position, the headrest is able to rotate around its upper articulation axis 7 with a forward movement (i.e. a movement in the direction of arrow A in figure 1) of its rear part. The headrest is provided with a first spring means which in the illustrated example comprise a helical spring 8 connected at its ends to a respective vertical rod 3 of the fixed supporting structure 2, and to one ear 6b formed in the lower part of the rear portion of the headrest frame 6. In the illustrated condition, spring 8 is in a tensioned deformed condition, so that it tends to bias the frame 6 towards a forwardly rotated position, corresponding to a forward movement of its lower part.

By 9 there is generally designated the padded body, which, according to the conventional technique, covers the headrest frame 6 and is for instance made of foamed plastic. On its turn, body 9 is covered by a covering layer 10. In figure 1 there is shown by dotted line the position reached by the front surface of the headrest padding in the forwardly rotated condition.

Frame 6 is provided at the inside thereof with a body 11 which is fixed to the front wall of the frame 6 and has a guiding passage 12, having a vertical axis, within which there is slidably guided a lock bolt 13 constituting the primary locking member of the device. In the condition illustrated in figure 1, the lock bolt 13 is in its active position, in which its lower end 14 is engaged within the seat 15 formed in the receiving element 5.

Reference numeral 16 designates a helical spring constituting a second spring means which is interposed between the lock bolt member 13 and an ear 17 fixed to the wall of the frame 6. In the illustrated condition, the spring 16 is in a deformed tensioned condition, so that it tends to bias the lock bolt member 13 towards a raised position in which its lower end 14 is disengaged from seat 15.

The primary lock bolt 13 is held in its condition of engagement within the cooperating seat 15 by a secondary lock bolt 18 having a frame-like structure with a central opening 19 and a front side whose inner edge 20 cooperates with a corresponding seat in the body of the primary lock bolt 13. The structure of the secondary lock bolt 18 is connected to a piston member 21 which is slidably guided within a cylinder 22 which is carried by the headrest frame 6 with the aid of brackets 23 and has its axis directed parallel to the longitudinal direction of the headrest. To the rear wall of the frame 6 there is glued a bag of deformable plastic material 24 whose inner chamber 25 is filled with a liquid and is in communication with a chamber 26 arranged inside cylinder 22 and facing the piston 21. To the front face of bag 24 there is glued an inertial mass 27, which is constituted for instance by a metal plate.

The operation of the above described headrest unit is the following.

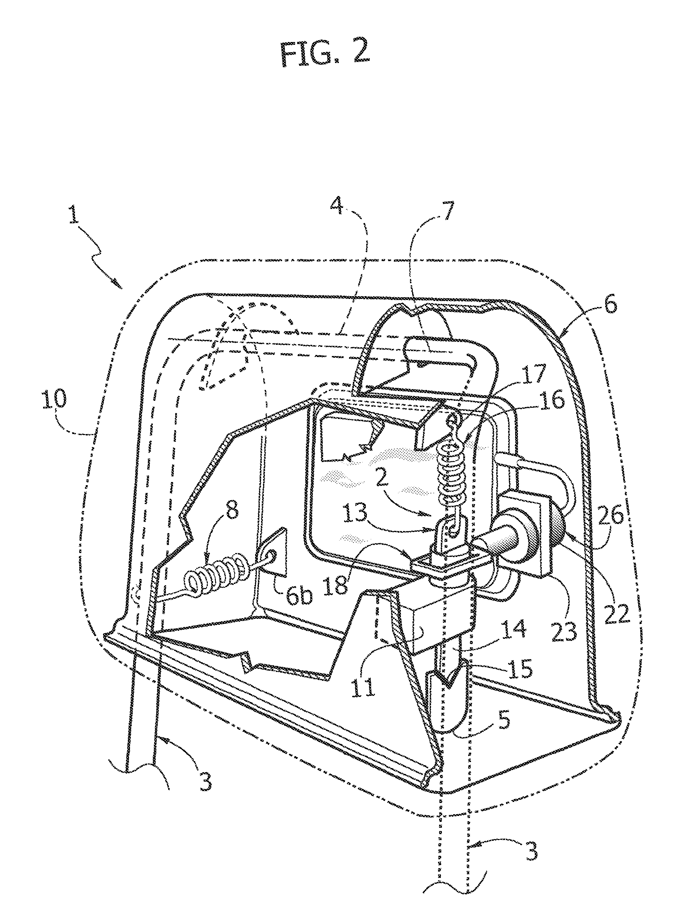

In the normal operative condition, the headrest is in the condition shown in figures 1, 2. In this condition, spring 8 is not able to forwardly rotate the headrest around its upper articulation axis 7, since the primary lock bolt 13 is in engagement within seat 15 of body 5 fixed to one of the two vertical supporting rods 3, which form part of the headrest supporting structure 2. The primary lock bolt 13 remains in its condition engaged within the respective seat 15, against the action of spring 16, since it is held by the secondary lock bolt 18 which cannot move rightwardly (with reference to figure 1) since a rightward movement of piston 21 is prevented by the liquid present within chamber 25 of the deformable bag 24.

In case of a rear collision of the motor vehicle, the inertial mass 27 applies a force against the deformable bag 24 which causes a compression of this bag with a resulting transfer of liquid from chamber 25 to chamber 26. Piston 21 is therefore compelled to move leftwardly (with reference to figure 1) so as to disengage the secondary lock bolt 18 from the primary lock bolt 13. The primary lock bolt 13 is therefore free to disengage from seat 15 in the body 5 due to the action of the spring 16. Once the primary lock bolt 13 has been disengaged, sprig 8 is free to rotate the headrest forwardly around its upper articulation axis 7 so as to provide the required support for the occupant's head, thus avoiding the whiplash.

Once the anti-whiplash device has been activated, the headrest can be restored to the condition of normal use by a manual operation. To this end, the headrest is rotated back rearwardly to its normal position of use, the primary lock bolt 13 is manually held in is lowered position engaged within the seat 15 and the secondary lock bolt 18 is restored to its position engaging the primary lock bolt 13 so as to ensure that the device remains again in the condition shown in figure 1. The above mentioned operations are made easier since access to the inner parts of the headrest is possible through the lower mouth 6a of frame 6.

Preferably to the unit according to the invention there is associated a device which locks the headrest in the forwardly rotated position after a collision, such as a linkage which reaches a no-return condition in the forwardly rotated position of the headrest, thus preventing the latter from returning to the condition of normal use.

Naturally, while the principle of the invention remains the same, the details of construction and the embodiments may widely vary with respect to what has been described and illustrated purely by way of example, without departing from the scope of the present invention.

## Claims

1. Headrest unit for a motor vehicle seat, comprising:
- a headrest supporting structure (2), which can be fixed to the structure of the seat backrest,
- a headrest frame (6), provided with a headrest padding (9), pivotally mounted on said supporting structure (2) around a horizontal transverse axis (7) and movable between a position of normal use and a forwardly rotated position,
- an inertial mass (28), carried by the headrest frame (6), to cause a movement of the headrest frame from the position of normal use to the forwardly rotated position following a rear collision of the motor vehicle,
**characterized in that**:
- between the headrest frame (6) and the headrest supporting structure (2) there are interposed first spring means (8) for biasing the headrest frame towards the forwardly rotated position,
- on the headrest frame (6) there is mounted a primary locking member (13) which engages the supporting structure (2) so as to hold the headrest frame (6) in its position of normal use, against the action of said first spring means (8),
- between the primary locking member (13) and the headrest frame (6) there are interposed second spring means (16) which tend to bias the primary locking member (13) towards a position disengaged from the headrest supporting structure (2),
- the headrest frame (6) carries a secondary locking member (18) which is elastically pushed to a position in which it holds the primary locking member in its locked condition, against the action of said second spring means (16), and
- said inertial mass (27) is arranged to push the secondary locking member (18) with the aid of fluid actuating means towards a position disengaged from the primary locking member (13) following a rear collision of the motor vehicle.

2. Headrest unit according to claim 1, **characterized in that** said fluid actuating means comprise a deformable bag (24) filled with liquid, whose inner chamber (25) is in communication with the inner chamber (26) of a cylinder (22) having a piston (21) operatively connected to said secondary locking member (18) and **in that** said inertial mass (27) is associated to a wall of this deformable bag (24) so as to compress this bag and cause a transfer of liquid from said inner chamber (25) of the bag to said chamber (26) of the cylinder following a rear collision of the motor vehicle.

3. Headrest unit according to claim 1, **characterized in that** the headrest frame (6) is pivotally mounted around said horizontal transverse axis (7) at its upper portion.

4. Headrest unit according to claim 1, **characterized in that** said first spring means (8) comprises at least one spring interposed between the headrest supporting structure (2) and a lower portion of the headrest frame (6) and tending to bias this lower portion forwardly.

5. Headrest unit according to claim 1, **characterized in that** this primary locking member (13) is constituted by a lock bolt member slidably and vertically mounted within a guiding body (11) fixed to the headrest frame (6) and having one lower active end (14) able to cooperate with a seat (15) formed in a receiving element (5) forming part of the headrest supporting structure (2).

6. Headrest unit according to claim 4, **characterized in that** said second spring means (16) comprise at least one spring interposed between said primary lock bolt member (13) and the headrest frame (6) and tending to bias this primary lock bolt member (13) upwardly.

7. Headrest unit according to any of the previous claims, **characterized in that** said headrest frame (6) has a hollow structure open at the bottom, so as to have a lower mouth (6a) through which access to the inner parts of the headrest is provided.
